# EUROPÄISCHE PATENTSCHRIFT

(11) **EP 0 856 897 B1**
(45) Veröffentlichungstag und Bekanntmachung des Hinweises auf die Patenterteilung: **10.04.2002**
(21) Anmeldenummer: 98101636.3
(22) Anmeldetag: 30.01.1998
(51) Int. Cl.: H01M 2/12

(54) **Entgasungsstopfen für Akkumulatoren**
Vent plug for storage batteries
Bouchon à évent pour accumulateurs électriques

(30) Priorität: 30.01.1997 DE 19703444
(43) Veröffentlichungstag der Anmeldung: 05.08.1998
(73) Patentinhaber: W.L. GORE & ASSOCIATES GmbH, 85640 Putzbrunn (DE); Banner GmbH, 4021 Linz (AT)
(72) Erfinder: Wiemer, Thorsten, 83512 Wasserburg (DE); Zwingl, Franz, 4030 Linz (AT); Hackl, Josef, 4020 Linz (AT); Maleschitz, Norbert, 4600 Wels (AT)
(74) Vertreter: Klunker . Schmitt-Nilson . Hirsch

(56) Entgegenhaltungen:
- DE-C- 19 642 238
- FR-A- 1 373 053
- FR-A- 1 543 874
- FR-A- 2 222 758
- FR-A- 2 497 605
- GB-A- 324 533
- US-A- 4 636 446
- PATENT ABSTRACTS OF JAPAN vol. 010, no. 363 (E-461), 5.Dezember 1986 & JP 61 161655 A (MATSUSHITA ELECTRIC IND CO LTD), 22.Juli 1986,
- PATENT ABSTRACTS OF JAPAN vol. 010, no. 370 (E-463), 10.Dezember 1986 -& JP 61 165954 A (MATSUSHITA ELECTRIC IND CO LTD), 26.Juli 1986,
- PATENT ABSTRACTS OF JAPAN vol. 010, no. 363 (E-461), 5.Dezember 1986 -& JP 61 161656 A (MATSUSHITA ELECTRIC IND CO LTD), 22.Juli 1986,
- PATENT ABSTRACTS OF JAPAN vol. 011, no. 341 (E-554), 7.November 1987 -& JP 62 122054 A (MATSUSHITA ELECTRIC IND CO LTD), 3.Juni 1987,
- PATENT ABSTRACTS OF JAPAN vol. 013, no. 433 (E-824), 27.September 1989 -& JP 01 161663 A (MATSUSHITA ELECTRIC IND CO LTD), 26.Juni 1989,
- PATENT ABSTRACTS OF JAPAN vol. 013, no. 051 (E-712), 6.Februar 1989 & JP 63 244554 A (AISIN SEIKI CO LTD;OTHERS: 01), 12.Oktober 1988,
- PATENT ABSTRACTS OF JAPAN vol. 095, no. 011, 26.Dezember 1995 -& JP 07 220706 A (MATSUSHITA ELECTRIC IND CO LTD), 18.August 1995,
- PATENT ABSTRACTS OF JAPAN vol. 012, no. 101 (E-595), 2.April 1988 -& JP 62 232853 A (MATSUSHITA ELECTRIC IND CO LTD), 13.Oktober 1987,

## Beschreibung

Die vorliegende Erfindung betrifft einen Stopfen für Akkumulatoren, insbesondere Bleiakkumulatoren, mit einem Gasraum oberhalb eines in dem Akkumulator enthaltenen Gases, bei dem der Gasaustausch durch einen flüssigkeitsundurchlässigen und gasdurchlässigen Körper hindurch erfolgt und bei dem zwischen dem Körper und dem Gasraum oberhalb des Elektrolyten ein Aerosolabscheider angeordnet ist.

Akkumulatoren, und insbesondere Bleiakkumulatoren, gasen stets wegen der zugrunde liegenden elektrochemischen Prozesse beim Ent- und Aufladen. Daher weisen die Verschlußstopfen der Zellen Bohrlöcher auf, durch welche hindurch der Gasaustausch erfolgen kann. Die herkömmlichen Stopfen weisen daher den Nachteil auf, daß sie die Zellen nicht vollständig flüssigkeitsdicht abschließen, was bei extremen Betriebszuständen oder Unfällen und Havarien zum Auslaufen der sehr aggressiven und stark korrosiven Elektrolytlösungen, wie beispielsweise Schwefelsäure, zu erheblichen Nachteilen und Gefährdungen führen kann.

DE-U 91 04 291 und DE-U 93 12 173 beschreiben Verschlußstopfen für einen Bleiakkumulator, bei dem in Gasauslaßrichtung einem Druckentlastungsventil eine mikroporöse Fritte bzw. ein mikroporöser Körper vorgelagert ist. Nachteilig ist bei der Verwendung von mikroporösen Körpern, daß die Aerosole und besonders Schwefelsäure als kriechende Säure die Poren des mikroporösen Körpers verstopfen oder verkleben können. Dadurch wird die Gasdurchlässigkeit eingeschränkt und der Akkumulator nicht mehr sicher.

Nachteilig ist ferner, daß diese Körper auch nicht flüssigkeitsabweisend sind. Hierzu beschreibt DE-OS 38 05 570 eine poröse anorganische Substanz, bei der die Oberfläche der Poren mit einem Innenfilm aus einem Silanoder Titan-Haftmittel und einem Außenfilm aus Fluorcarbonharz überzogen ist. Nachteilig ist hierbei insbesondere, daß solche Körper nur schwierig herstellbar und somit sehr teuer sind.

Weitere Verschlußstopfen werden in der DE-PS 346 621 und in der DE-PS 30 18 372 C2 beschrieben.

"JP 07/220706 A beschreibt einen gattungsgemäßen Stopfen mit einem dem porösen Körper vorgelagerten Aerosolabscheider. Dieser Aerosolabscheider kombiniert eine Massenträgheitsabscheidefunktion und eine Kaskadenabscheidefunktion, indem aufsteigendes Gas/Aerosol zunächst durch ein zentral in dem Stopfen angeordnetes Rohr bis zu einer Platte am Rohrende aufsteigen kann, wo das Gas/Aerosol radial nach außen umgeleitet wird (Massenträgheitsabscheidung) und das Aerosol fließt dann an der Unterseite der über den Umfang des Rohres herausragenden Platte entlang, bis es am Ende der Platte angelangt und von dort weiter zu dem darüber angeordneten porösen Körper aufsteigen kann (Kaskadenabscheidung)".

Aufgabe der vorliegenden Erfindung ist es, einen Stopfen zu schaffen, welcher die Nachteile des Standes der Technik überwindet und einen besonders effektiven, dem porösen Körper vorgelagerten Aerosolabscheider aufweist.

Die Aufgabe wird erfindungsgemäß durch die kennzeichnenden Merkmale des Hauptanspruchs gelöst. Vorteilhafte Weiterbildungen sind in den abhängigen Ansprüchen gekennzeichnet.

"Die Aufgabe wird dadurch gelöst, daß der Aerosolabscheider eine Massenträgheitsabscheidefunktion mit einer Zentrifugalabscheidefunktion kombiniert, wobei der Massenträgheitsabscheider ein Rohr aufweist, dessen dem Elektrolyten zugewandtes Ende offen ist und dessen gegenüberliegendes Ende geschlossen ist, an welchem geschlossenen Ende ein vom Elektrolyt aufsteigender Gas-/Aerosolstrom radial nach außen umgeleitet wird, und wobei der Zentrifugalabscheider, dem der im Massenträgheitsabscheider umgeleitete Gas-/Aerosolstrom zugeleitet wird, zwischen dem Rohr und einer Innenfläche des Stopfenkörpers eine Zwangsführung in Umfangsrichtung um das Rohr herum bildet."

Besonders vorteilhaft ist es, wenn der flüssigkeitsundurchlässige und gasdurchlässige Körper eine Membrane ist, insbesondere eine poröse Membrane oder Schicht aus synthetischen Polymeren. Der Aufbau dieser Membrane verhindert, daß Elektrolytflüssigkeit vom Inneren des Akkumulators nach Außen gelangt, jedoch ein Transport von gasförmigen Stoffen aus dem Inneren in die Umgebung erfolgt.

Der erfindungsgemäße Stopfen umfaßt somit eine Membrane, welche den Gasaustausch zwischen dem Elektrolytenraum und der Umgebung ermöglicht und einen Aerosolabscheider, welcher durch die Elektrolysegase mitgerissenen Elektrolytdämpfe und Aerosole abscheidet, bevor diese auf die Membrane treffen können. Durch diese Anordnung wird erreicht, daß die Akkumulatorzelle entgast wird, ohne daß die Membrane von Elektrolytaerosolen benetzt wird, wobei es zu einer Reduzierung des Gasaustausches kommen würde.

Die Membrane besteht in bevorzugter Weise aus einem Material, welches gegenüber den Elektrolyten der Akkumulatoren inert und beständig ist. Geeignete Materialien für die flüssigkeitsundurchlässige, gasdurchlässige Membrane sind insbesondere Polyethylen, Polypropylen, Polytetrafluorethylen (PTFE) und Polyvinylidenfluorid (PVDF).

Vorzugsweise besteht die Membrane aus einem gereckten mikroporösen Polyteraflourethylen (ePTFE), wie es beispielsweise in den Druckschriften US-A-3,953,566 sowie US-A-4,187,390 beschrieben ist. Derartige Membrane sind extrem haltbar, temperaturbeständig und chemisch inert. Eine poröse Polytetrafluorethylenschicht sollte eine Dicke von 3 bis 1000µm, vorzugsweise von 5 bis 100µm haben, eine Porosität von 20 bis 98%, vorzugsweise von 50 bis 90% und eine nominelle Porengröße von 0,05 bis 15µm, vorzugsweise von 0,1 bis 2µm.

Unter porös wird hierbei ein Material verstanden, daß den Durchgang von Gasen gestattet. Derartige Materialien enthalten Poren und leeren Räumen welche Durchgänge durch die Dicke des Materials bilden. Diese Durchgangswege sind an beiden Seiten des Materials offen und können im Inneren miteinander verbunden sein.

Der Begriff gasdurchlässig beschreibt hierbei die Eigenschaft der Membrane gasförmige Stoffe zu transportieren. Dieser Begriff beschreibt den allgemeinen Effekt des Massentransportes durch Diffusion und bedeutet in keinster Weise einen bestimmten wissenschaftlichen Mechanismus.

Unter dem Begriff flüssigkeitsundurchlässig ist zu verstehen, daß eine Flüssigkeit aus dem Inneren des Akkumulators nicht nach außen gelangen kann. Es findet kein Transport einer Flüssigkeit durch die Membrane statt.

Ferner kann die Membrane erfindungsgemäß laminiert sein. Vorzugsweise ist die Membrane auf mindestens eine aus einem Trägermaterial bestehende Schicht laminiert.

Das Trägermaterial für die Laminierung besteht aus einem Vlies, einem Gewebe, einem Gewirke, einer Lochplatte oder einem Gitter.

Um den erforderlichen raschen Gasaustausch zu erzielen, muß die erfindungsgemäße Membrane bestimmte geometrische und physikalische Anforderungen erfüllen. Überraschenderweise hat sich gezeigt, daß der Gasaustausch besonders effektiv geschieht, wenn die Membrane eine Porengröße von höchstens 1 µm, eine Porosität von mindestens 50 % und eine Dicke von höchstens 20 µm aufweist

Bevorzugterweise betragen die Porengröße höchstens 0,5 µm, die Porosität mindestens 65 % und die Dicke höchstens 10 µm.

Besonders bevorzugt ist es, wenn die Porengröße höchstens 0,45 µm, die Porosität mindestens 70 % und die Dicke höchstens 5 µm betragen.

Derartige geeignete Membranen werden hergestellt, indem ein dicker, extrudierter, angefeuchteter Polytetraethylenfilm verwendet wird, der erst in Querrichtung um das weniger als 3fache gestreckt, getrocknet und dann in Längsrichtung erst um das 10- bis 100fache und dann erneut in Längsrichtung zwischen 1:1-bis 1:1,5fach und abschließend in Querrichtung gestreckt wird, wobei dem Schrumpfen des Films entgegengewirkt wird. Geeignete Membranen sind in der US-PS 5,476,589 beschrieben.

Die Messung der Porengröße erfolgt mit einem Coulter Porometer, hergestellt durch die Coulter Electronics, Inc., FL. Der Coulter Porometer ist ein Instrument, das eine automatische Messung der Porengrößenverteilung in porösen Medien erlaubt unter Nutzung der Methode der Flüssigkeitsverdrängung (siehe ASTM Std. F316-86).

Die Dicke der Membrane wurde mit einem Meßgerät bestimmt der Johannes Kafer Co. Model No. F1000/302.

Erfindungsgemäß kann die Membrane gegebenenfalls auch oleophobiert sein. In einer bevorzugten Ausführungsform ist die Membrane mit einer Schicht aus Teflon®AF oleophobiert. Teflon®AF ist erhältlich bei der Firma Du Pont/USA.
Der Ölabweisungsgrad eines Stoffes kann gemessen werden mit der American Association of Textile Chemnists and Colorists (AATCC) Standardtestmethode No. 118-1983. Dieser Test basiert auf den Widerstand des behandelten Stoffes gegen das Ein- und Durchdringen von Öl mit verschiedenen Oberflächenspannunger

Der in dem erfindungsgemäßen Stopfen enthaltene Aerosolabscheider kann desweiteren einen Faserabsorber und/oder einen Kaskadenabscheider umfassen.

Besonders bevorzugt ist es, wenn der Aerosolabscheider eine konstruktive Einheit aus einem Massenträgheitsabscheider, einem Zentrifugalabscheider und einem Kaskadenabscheider bildet.

Besonders bevorzugt ist es, wenn der Aerosolabscheider aus einem hohlen zylindrischen Rohr besteht, dessen äußerer Durchmesser wesentlich kleiner ist, als der Innendurchmesser an der dem Elektrolyten zugewandten Seite des Stopfens. Das Rohr trägt an der dem Elektrolyten zugewandten Seite eine ringförmig ausgebildete, konzentrische Verdickung. Diese Verdickung weist im wesentlichen einen Durchmesser auf, welcher gleich dem Innendurchmesser des Stopfens ist. Die einander gegenüberliegenden Flächen der ringförmigen Verdickung bilden einen Winkel derart zueinander, daß die dem Elektrolyten zugewandte Seite im wesentlichen waagerecht ausgebildet ist und die andere Seite eine Neigung aufweist, welche von Außen nach Innen gesehen, ansteigt. Auf dem Rohrende, welches dem Elektrolyten abgewandt ist, ist eine konzentrische Platte angeordnet, wobei der Durchmesser dieser Platte im wesentlichen gleich dem Innendurchmesser des Stopfens ist.
Weiterhin trägt die Platte eine erste Bohrung, das Rohr eine zweite Bohrung und die Verdickung eine dritte Bohrung. Die Bohrungen in der Platte und in der Verdickung verlaufen parallel zur Außenfläche des Rohres, wobei die Bohrungen um 180 versetzt angeordnet sind. Die zweite Bohrung ist durch die Rohrwandung des zylindrischen Rohres hindurch angeordnet, wobei diese Bohrung zu der Bohrung in der Verdickung hinweist und diametral gegenüber zur Bohrung in der Platte liegt. Die Bohrung der Platte bzw. Verdickung bildet zu der Bohrung in der Rohrwandung einen Winkel von 90 zueinander.

Vorteilhafterweise kann im Gasraum zwischen dem Absorberelement und der Membrane zusätzlich ein Faserabsorber vorhanden sein.

Die Herstellung des erfindungsgemäßen Stopfens erfolgt derart, daß in einen entsprechend vorgerichteten Stopfen die Membrane eingeschweißt, eingeklemmt, angespritzt, umspritzt oder in anderer geeigneter Weise mit dem Material des Stopfen flüssigkeitsdicht verbunden wird. In einer bevorzugten Ausführungsform wird die Membrane in den Stopfen eingeschweißt. Der Aerosolabscheider wird in den Stopfen gleichfalls eingeklemmt, eingeschweißt, angespritzt oder in sonstiger Weise mit dem Material des Stopfen flüssigkeitsdicht verbunden. In bevorzugter Weise wird der Aerosolabscheider in den Stopfen eingeklemmt.

Zur näheren Erläuterung der vorliegenden Erfindung, ihrer weiteren Merkmale und Vorteile dient die nachfolgende Beschreibung von Ausführungsbeispielen der Erfindung unter Bezugnahme auf die angefügten Zeichnungen.

Es zeigen:
Fig. 1 eine Schnittdarstellung einer Ausführungsform des Stopfens,
Fig. 2 eine Schnittdarstellung des Aerosolabscheiders,
Fig. 3 eine Draufsicht gemäß Fig. 2, teilweise gebrochen.

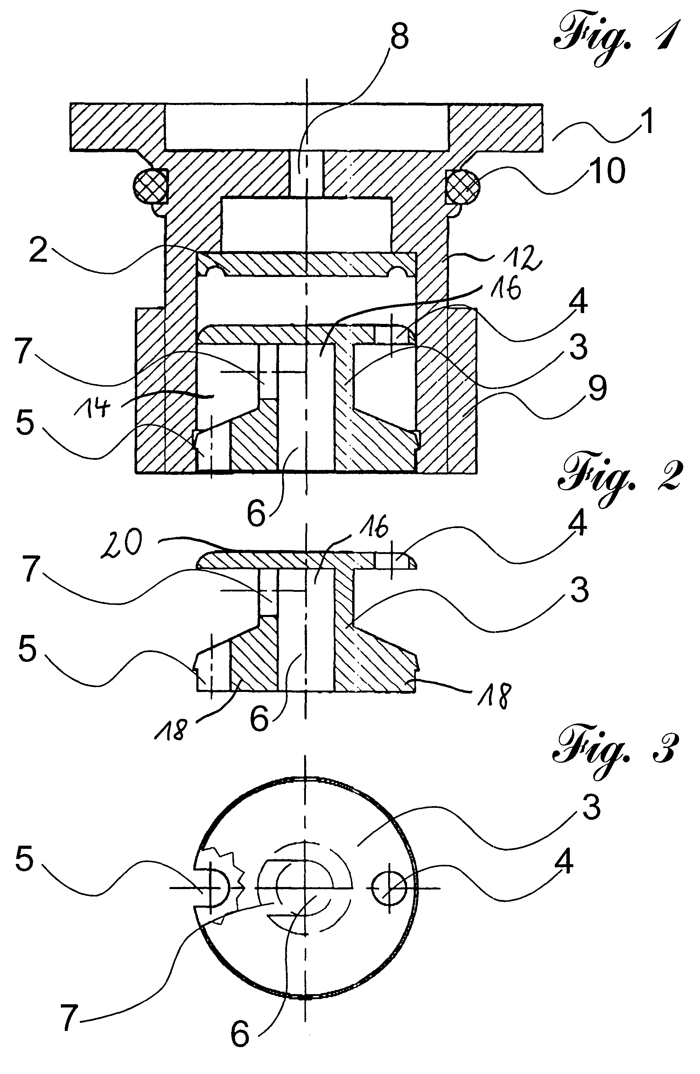

Ein Stopfen 1 umfaßt einen Stopfenkörper 12 und eine eingelegte Membrane 2 und einen eingesetzten Aerosolabscheider 3. Die Membrane 2 und der Aerosolabscheider 3 sind fest mit dem Stopfenkörper verbunden, so daß weder Gase noch Flüssigkeiten durch die Berührungsstellen dringen können. Dabei ist die Membrane 2 in den Stopfen 1 eingespritzt und der Aerosolabscheider 3 in den Stopfen 1 eingeklemmt worden. Der Stopfen 1 trägt ein Gewinde 9 zum Festsetzen des Stopfen 1 in der Zellenöffnung des Akkumulators (nicht dargestellt) und einen O-Ring 10 zur Abdichtung der Zellenöffnung des Akkumulators. Der Stopfenkörper 12 weist ferner an der Oberseite eine Bohrung 8 auf, welche zur Belüftung zur Atmosphäre hin dient.

Die Membrane 2 ist aus einem Material hergestellt, welches undurchlässig gegenüber der Flüssigkeit im Akkumulator ist, jedoch gasdurchlässig gegenüber den Gasen, die sich in dem Raum oberhalb der Elektrolytflüssigkeit befinden. Die Membrane 2 wird in runder oder eckiger Form verwendet, es sind jedoch auch weitere geografische Formen möglich. Vorzugsweise ist die Membrane 2 aus expandiertem PTFE wie es in der US-PS 5,476,589 beschrieben ist. Andere Membrane aus einem anderen Material wie Polyethylen oder Polypropylen können auch zur Anwendung kommen, soweit sie die Anforderungen wie flüssigkeitsdicht und gasdurchlässig erfüllen.

Weiterhin ist die Membrane 2 auf einer Seite mit einem Trägermaterial aus einem Gewebe laminiert. Die laminierte Membrane 2 ist flüssigkeitsdicht gegenüber dem Elektrolyten Schwefelsäure bei einem Druck von 100mbar für 24h. Weiterhin weist die Membrane 2 eine Gasdurchlässigkeit von 1150ml/0,7cm²/100mbar (bei 0,6-0,8 kg Batteriemasse) bis 2300ml/0,7cm²/100mbar (bei 3,0-4,0 kg Batteriemasse) auf.

Der Aerosolabscheider 3 hat eine erste Bohrung 5 und eine zweite Bohrung 6, wobei die zweite Bohrung 6 zu einem zylindrisches Rohr 16 ausgebildet ist, aus dem der Aerosolabscheider (3) aufgebaut ist.
Die bei den elektrochemischen Prozesse gebildeten Gase/Aerosole treten von der Unterseite des Aerosolabscheiders 3 in Bohrungen 5 und 6 ein. Die Bohrungen 5 und 6 sind derart gestaltet, daß die zentrale Bohrung 6 einen größeren Durchmesser aufweist als die exzentrische Bohrung 5. Die durch die Bohrung 6 strömenden Gase/Aerosole werden an der Innenfläche der oberen Platte 20 des Aerosolabscheiders 3 um 90° in Richtung auf eine Querbohrung 7 abgelenkt und treffen dort auf die durch die Bohrung 5 nach oben strömenden Gase/Aerosole. Die Gas/Aerosol-Ströme vermischen sich und werden dann zentrifugal abgelenkt, da diese auf die Innenfläche des Stopfenkörpers 12 treffen. Nach einer radialen Richtungsänderung um 180° treten die Gase nach einer weiteren Richtungsänderung um 90° aus einer Längsbohrung 4 in den Stopfenkörper 12 ein. Von dort werden die Gase, welche nunmehr nahezu aerosolfrei sind, durch die Membrane 2 über die Bohrung 8 in die Atmosphäre abgegeben.

Die Bohrung 6 wirkt ferner noch als Rücklauf für abgeschiedene Elektrolytflüssigkeit, welche in den Aerosolen enthalten war. Diese Elektrolyten können einerseits durch die Bohrung 5 abfließen, jedoch ist wegen des geringen Durchmessers der Bohrung 5 dieser Abfluß nicht immer gewährleistet, insbesondere nicht bei stark kriechenden Elektrolyten wie Schwefelsäure. Auch bei ungünstigen Betriebslagen des Akkumulators kann Elektrolytflüssigkeit in den Aerosolabscheider 3 gelangen und dessen Wirksamkeit beeinträchtigen. Auch in diesem Falle ist das Abfließen sichergestellt, da durch die beiden vorhandenen Bohrungen 5 und 6 stets ein Druckausgleich erfolgt.

Die Bohrungen 5, 6 und 7 des erfindungsgemäßen Stopfens 1 bewirken eine Reihe komplex zusammenwirkender Effekte. Diese sollen nachfolgend nochmals ausführlich erläutert werden.

Die Gase/Aerosole werden über die Bohrungen 5 und 6 dem Aerosolabscheider 3 zugeführt. Dabei hat die Bohrung 6 einen größeren Durchmesser als die Bohrung 5. Somit ist die Bohrung 6 nach dem Prinzip des geringsten Widerstandes in der Hauptsache Gas/Aerosolzufuhr für den Aerosolabscheider 3. Bei hohem Gas/Aerosolaufkommen strömen diese ebenso über die Bohrung 5 in den Aerosolabscheider 3.

Durch den im Verhältnis zum Raum vor dem Aerosolabscheider 3 wesentlich kleinere Durchmesser der Bohrungen 5 und 6 werden die Gase/Aerosole in ihrer Geschwindigkeit (v) stark beschleunigt.

Der Abscheideraum 14 ist wiederum größeren Durchmessers als die Bohrungen 5 und 6 und im Querschnitt kreisförmig. Die Gase/Aerosole treten über den Austritt 7 mit hoher Geschwindigkeit v aus der Bohrung 6 und werden aufgrund des kreisförmigen Querschnittes zentrifugal in eine kreisförmige Bahn gelenkt und gleiten an der Innenwand entlang. Dabei verringert sich die Geschwindigkeit v der schwereren Aerosole (Massenträgheit) schneller als der gasförmigen Teilchen, die Aerosole lösen sich aus dem Gas und gleiten an der Innenwand nach unten ab, während die gereinigten Gase durch 4 zur Membrane 2 gelangen.

Außerdem kann in diesem Prozeß Wasserdampf kondensieren und ebenfalls dem Akkumulator wieder zugeführt werden.

Eine Optimierung des Verfahrens ist erfindungsgemäß durch den Einbau von festen Elementen in die Strömungsrichtung des Gas/Aerosolstromes im Inneren des Aerosolabscheiders 3 möglich. Diese Elemente sind als Schaufeln, Stege oder Fasern ausgebildet. Sind diese Elemente als Schaufeln ausgebildet, dann gleitet der zugeführte Gas/Aerosolstrom die Innenflächen der Schaufeln entlang. Dies führt zu einem wesentlich verbesserten Abscheidegrad.

Die Bohrung 5 dient der Abführung der abgeschiedenen Flüssigkeit. Übersteigt die Menge an Flüssigkeit den Durchsatz der Bohrung 5, dann wirkt die Bohrung 7 als Überlauf für die Bohrung 5 und die überschüssige Flüssigkeit läuft über die Bohrung 6 ab.

Weiterhin kann es bei ungünstigen Lagen des Akkumulators dazu kommen, daß Elektrolytflüssigkeit, beispielsweise Säureflüssigkeit in den Aerosolabscheider 3 gelangt, diesen verstopft und bei Rückführung in die Normallage ein Abfluß über die Bohrung 5 nicht gewährleistet ist (beispielsweise bei stark kriechenden Säuren). In diesem Falle stellt sich die Bohrung 6 als zusätzlicher Abfluß dar.

Durch die Konstruktion des Aerosolabscheiders 3 wird eine Kombination von senkrecht nach oben gerichteten sowie kaskadenförmigen und zentrifugalen Wegstrecken geschaffen, durch welche die Flüssigkeitsanteile der Aerosole in wirksamer Weise abgeschieden werden. Diese konstruktive Einheit eines Aerosolabscheiders 3 weist somit die Eigenschaften eines Massenträgheits-, Kaskaden- und Zentrifugalabschieders auf und kombiniert diese Arten von Abscheidern zu einem effektiven, kompakten und einfach konstruierten Bauteil.

Erforderlichenfalls kann zwischen der Membrane 2 und der Oberseite des Aerosolabscheiders 3 ein Faserabsorber angeordnet werden. Dieser Faserabsorber kann auf der Oberseite des Aerosolabscheider 3 fixiert werden. Möglich ist auch eine Faserabsorberschicht auf die Membrane 2 oder auf der Unterseite eines gegebenenfalls vorhandenen Trägers zu laminieren.

### Bezugszeichenliste

- 1: Stopfen
- 2: Membrane
- 3: Aerosolabscheider
- 4,5,6: Längsbohrung
- 7: Querbohrung
- 8: Längsbohrung
- 9: Gewinde
- 10: O-Ring
- 12: Stopfenkörper
- 14: Abscheideraum
- 16: zylindrisches Rohr
- 18: Verdickung
- 20: konzentrische Platte

## Patentansprüche

1. Stopfen für Akkumulatoren mit einem Gasraum oberhalb eines in dem Akkumulator enthaltenen Elektrolyts, bei dem ein Gasaustausch durch einen flüssigkeitsundurchlässigen und gasdurchlässigen Körper (2) hindurch erfolgt und bei dem zwischen dem Körper und dem Gasraum oberhalb des Elektrolyten ein Aerosolabscheider (3) angeordnet ist, wobei der Aerosolabscheider (3) aufweist:
- ein Rohr (16) mit einem dem Elektrolyten zugewandten offenen Ende und einem vom Elektrolyten entfernten geschlossenen Ende, an welchem geschlossenen Ende ein vom Elektrolyt aufsteigender Gas/Aerosolstrom radial nach außen umgeleitet wird, und
- einen Abscheideraum (14) zwischen dem Rohr (16) und einer Innenfläche des Stopfen (12), dem der umgeleitete Gas-/Aerosolstrom zugeleitet wird und der den Aerosolstrom zentrifugal in eine kreisförmige Bahn lenkt.

2. Stopfen gemäß Anspruch 1 **dadurch gekennzeichnet, daß** der flüssigkeitsundurchlässige und gasdurchlässige Körper eine Membrane (2) ist.

3. Stopfen gemäß Anspruch 2, **dadurch gekennzeichnet, daß** die Membrane (2) aus einem Material besteht, welches ausgewählt ist aus der Gruppe der folgenden Materialien: Polypropylen, Polyethylen, Polytetrafluorethylen (PTFE) und Polyvinylidenfluorid (PVDF).

4. Stopfen gemäß Anspruch 3, **dadurch gekennzeichnet, daß** die Membrane (2) aus einem gereckten mikroporösen Polytetrafluorethylen (PTFE) besteht.

5. Stopfen nach mindestens einem der Ansprüche 2 bis 4, **dadurch gekennzeichnet, daß** die Membrane (2) oleophobiert ist.

6. Stopfen nach mindestens einem der Ansprüche 2 bis 4, **dadurch gekennzeichnet, daß** die Membrane (2) laminiert ist.

7. Stopfen nach Anspruch 6, **dadurch gekennzeichnet, daß** die Membrane (2) auf mindestens eine aus einem Trägermaterial bestehende Schicht laminiert ist.

8. Stopfen nach Anspruch 7, dadurch gekenn-zeichnet, daß das Trägermaterial bevorzugt ein Vlies, ein Gewebe, ein Gewirke, eine Lochplatte oder ein Gitter ist

9. Stopfen nach mindestens einem der Ansprüche 2 bis 8, **dadurch gekennzeichnet, daß** die Membrane (2) eine Porengröße von höchstens 1 µm aufweist.

10. Stopfen nach mindestens einem der Ansprüche 2 bis 8, **dadurch gekennzeichnet, daß** die Membrane (2) eine Porosität von mindestens 50 % aufweist.

11. Stopfen nach mindestens einem der Ansprüche 2 bis 8, **dadurch gekennzeichnet, daß** die Membrane (2) eine Dicke von höchstens 20 µm aufweist.

12. Stopfen nach mindestens einem der Ansprüche 2 bis 8, **dadurch gekennzeichnet, daß** die Membrane (2) eine Porengröße von höchstens 0,45 µm aufweist.

13. Stopfen nach mindestens einem der Ansprüche 2 bis 8, **dadurch gekennzeichnet, daß** die Membrane (2) eine Porosität von mindestens 70 % aufweist.

14. Stopfen nach mindestens einem der Ansprüche 2 bis 8, **dadurch gekennzeichnet, daß** die Membrane (2) eine Dicke von höchstens 5 µm aufweist.

15. Stopfen nach mindestens einem der voranstehenden Ansprüche, **dadurch gekennzeichnet, daß** der Aerosolabscheider (3) desweiteren einen Faserabsorber oder/und einen Kaskadenabscheider umfaßt.

16. Stopfen nach Anspruch 15, **dadurch gekennzeichnet, daß** der Aerosolabscheider(3) eine konstruktive Einheit aus einem Massenträgheitsabscheider, Zentrifugalabscheider und Kaskadenabscheider ist.

17. Stopfen nach Anspruch 16, **dadurch gekennzeichnet, daß** der Aerosolabscheider (3) aus einem hohlen zylindrischen Rohr (16) besteht, dessen äußerer Durchmesser wesentlich kleiner ist, als der Innendurchmesser an der dem Elektrolyten zugewandten Seite des Stopfens (1), wobei das Rohr (16) an der dem Elektrolyten zugewandten Seite, eine ringförmig ausgebildete, konzentrische Verdickung (18) trägt, welche im wesentlichen einen Durchmesser aufweist, welcher gleich dem Innendurchmesser des Stopfens (1) ist, wobei die einander gegenüberliegenden Flächen der ringförmigen Verdickung einen Winkel zueinander bilden, derart, daß die dem Elektrolyten zugewandte Seite im wesentlichen waagerecht ausgebildet ist und die andere Seite eine Neigung aufweist, welche von Außen nach Innen gesehen, ansteigt, und daß auf dem Rohrende, welches dem Elektrolyten abgewandt ist, eine konzentrische Platte (20) angeordnet ist, wobei der Durchmesser dieser Platte (20) im wesentlichen gleich dem Innendurchmesser des Stopfens (1) ist, und daß die Platte (20) eine erste Bohrung (4) trägt, das Rohr (16) eine zweite Bohrung (7) und die Verdickung (18) eine dritte Bohrung (5) trägt, wobei die Bohrungen (4),(5) in der Platte (20) und in der Verdickung (18) parallel zur Außenfläche des Rohres (16) verlaufen, wobei die Bohrungen (4),(5) um 180 ° versetzt angeordnet sind, und wobei die zweite Bohrung (7) durch die Rohrwandung des zylindrischen Rohres (16) hindurch angeordnet ist, wobei diese Bohrung (7) zu der Bohrung (5) in der Verdickung (18) hinweist und diametral gegenüber zur Bohrung (4) in der Platte (20) liegt, wobei die Bohrung (4) der Platte (20) bzw. die Bohrung (5) der Verdickung (18) zu der Bohrung (7) in der Rohrwandung des zylindrischen Rohres (6) einen Winkel von 90 zueinander bildet.

18. Stopfen nach Anspruch 17, **dadurch gekennzeichnet, daß** der Innendurchmesser des zylindrischen Rohres (16) größer ist als die dritte Bohrung (5).

19. Stopfen nach Anspruch 17 oder 18, **dadurch gekennzeichnet, daß** die dritte Bohrung (5) als Rücklauf für abgeschiedene Elektrolytflüssigkeit, welche in den Aerosolen enthalten war, wirkt.

20. Stopfen nach mindestens einem der voranstehenden Ansprüche, **dadurch gekennzeichnet, daß** im Inneren des Aerosolabscheiders (3) in Strömungsrichtung des Gas-/Aerosolstromes feste Elemente eingebaut sind.

21. Stopfen nach Anspruch 20, **dadurch gekennzeichnet, daß** die festen Elemente Schaufeln sind.

22. Stopfen nach Anspruch 20, **dadurch gekennzeichnet, daß** die festen Elemente Stege sind.

23. Stopfen nach Anspruch 20, **dadurch gekennzeichnet, daß** die festen Elemente Fasern sind.

24. Stopfen nach einem der voranstehenden Ansprüche, **dadurch gekennzeichnet, daß** zwischen der Membrane (2) und dem Aerosolabscheider (3) ein Faserabsorber angeordnet ist.

25. Stopfen nach Anspruch 24, **dadurch gekennzeichnet, daß** der Faserabsorber auf der Oberseite des Aerosolabscheiders (3) fixiert ist.

26. Stopfen nach Anspruch 24, **dadurch gekennzeichnet, daß** der Faserabsorber auf die Membrane (2) laminiert ist.

27. Stopfen nach Anspruch 24, **dadurch gekennzeichnet, daß** der Faserabsorber auf der Unterseite eines die Membrane (2) stützenden Trägers laminiert ist.

28. Stopfen nach einem der voranstehenden Ansprüche, **dadurch gekennzeichnet, daß** der Aerosolabscheider (3) in den Stopfen eingeschweißt, angespritzt oder eingeklemmt ist.

29. Stopfen nach Anspruch 28, **dadurch gekennzeichnet, daß** der Aerosolabscheider (3) in den Stopfen eingeklemmt ist.

30. Stopfen nach einem der Ansprüche 2 bis 29, **dadurch gekennzeichnet, daß** die Membrane (2) in den Stopfen eingeschweißt, eingeklemmt, angespritzt oder umspritzt ist.

31. Stopfen nach Anspruch 30, **dadurch gekennzeichnet, daß** die Membrane (2) in den Stopfen eingeschweißt ist.

32. Akkumulatoren mit mindestens einem Stopfen (1) nach einem der Ansprüche 1 bis 31.

33. Bleiakkumulatoren mit mindestens einem Stopfen (1) nach einem der Ansprüche 1 bis 31.

## Claims

1. A plug for accumulators having a gas space above an electrolyte contained in the accumulator wherein gas exchange takes place through a liquid-impermeable and gas-permeable body (2) and wherein an aerosol separator (3) is disposed between the body and the gas space above the electrolyte, the aerosol separator (3) having:
- a tube (16) with an open end facing the electrolyte and a closed end remote from the electrolyte, a gas/aerosol stream rising from the electrolyte being diverted radially outside at said closed end, and
- a separating space (14) between the tube (16) and an inside surface of the plug (12), to which the diverted gas/aerosol stream is supplied and which directs the aerosol stream centrifugally into a circular path.

2. A plug according to claim 1, **characterized in that** the liquid-impermeable and gas-permeable body is a membrane (2).

3. A plug according to claim 2, **characterized in that** the membrane (2) is made of a material selected from the group comprising the following materials: polypropylene, polyethylene, polytetrafluoroethylene (PTFE) and polyvinylidene fluoride (PVDF).

4. A plug according to claim 3, **characterized in that** the membrane (2) is made of an expanded microporous polytetrafluoroethylene (PTFE).

5. A plug according to at least one of claims 2 to 4, **characterized in that** the membrane (2) is oleophobed.

6. A plug according to at least one of claims 2 to 4, **characterized in that** the membrane (2) is laminated.

7. A plug according to claim 6, **characterized in that** the membrane (2) is laminated onto at least one layer consisting of a carrier material.

8. A plug according to claim 7, **characterized in that** the carrier material is preferably a nonwoven fabric, a woven fabric, a knitted fabric, a perforated plate or a grid.

9. A plug according to at least one of claims 2 to 8, **characterized in that** the membrane (2) has a pore size of at most 1 micron.

10. A plug according to at least one of claims 2 to 8, **characterized in that** the membrane (2) has a porosity of at least 50 percent.

11. A plug according to at least one of claims 2 to 8, **characterized in that** the membrane (2) has a thickness of at most 20 microns.

12. A plug according to at least one of claims 2 to 8, **characterized in that** the membrane (2) has a pore size of at most 0.45 microns.

13. A plug according to at least one of claims 2 to 8, **characterized in that** the membrane (2) has a porosity of at least 70 percent.

14. A plug according to at least one of claims 2 to 8, **characterized in that** the membrane (2) has a thickness of at most 5 microns.

15. A plug according to at least one of the above claims, **characterized in that** the aerosol separator (3) includes in addition a fiber absorber or/and a cascade separator.

16. A plug according to claim 15, **characterized in that** the aerosol separator (3) is a constructional unit comprising an inertia separator, centrifugal separator and cascade separator.

17. A plug according to claim 16, **characterized in that** the aerosol separator (3) consists of a hollow cylindrical tube (16) whose outside diameter is much smaller than the inside diameter on the side of the plug (1) facing the electrolyte, the tube (16) bearing on the side facing the electrolyte an annular, concentric thickening (18) which substantially has a diameter equal to the inside diameter of the plug (1), the mutually opposing surfaces of the annular thickening forming an angle such that the side facing the electrolyte is of substantially horizontal form and the other side has an inclination which rises when regarded from the outside to the inside, and a concentric plate (20) is disposed on the end of the tube facing away from the electrolyte, the diameter of said plate (20) being substantially equal to the inside diameter of the plug (1), and the plate (20) bears a first bore (4), the tube (16) a second bore (7) and the thickening (18) a third bore (5), the bores (4), (5) in the plate (20) and in the thickening (18) extending parallel to the outside surface of the tube (16), the bores (4), (5) being offset by 180°, and the second bore (7) being disposed through the wall of the cylindrical tube (16), said bore (7) pointing to the bore (5) in the thickening (18) and being diametrically opposite the bore (4) in the plate (20), the bore (4) of the plate (20) and the bore (5) of the thickening (10) forming a 90° angle to the bore (7) in the wall of the cylindrical tube (6).

18. A plug according to claim 17, **characterized in that** the inside diameter of the cylindrical tube (16) is greater than the third bore (5).

19. A plug according to claim 17 or 18, **characterized in that** the third bore (5) acts as a return for separated electrolytic liquid which was contained in the aerosols.

20. A plug according to at least one of the above claims, **characterized in that** fixed elements are installed in the interior of the aerosol separator (3) in the direction of flow of the gas/aerosol stream.

21. A plug according to claim 20, **characterized in that** the fixed elements are vanes.

22. A plug according to claim 20, **characterized in that** the fixed elements are bars.

23. A plug according to claim 20, **characterized in that** the fixed elements are fibers.

24. A plug according to any of the above claims, **characterized in that** a fiber absorber is disposed between the membrane (2) and the aerosol separator (3).

25. A plug according to claim 24, **characterized in that** the fiber absorber is fixed on the upper side of the aerosol separator (3).

26. A plug according to claim 24, **characterized in that** the fiber absorber is laminated onto the membrane (2).

27. A plug according to claim 24, **characterized in that** the fiber absorber is laminated on the underside of a carrier supporting the membrane (2).

28. A plug according to any of the above claims, **characterized in that** the aerosol separator (3) is welded, molded or clamped into the plug.

29. A plug according to claim 28, **characterized in that** the aerosol separator (3) is clamped into the plug.

30. A plug according to any of claims 2 to 29, **characterized in that** the membrane (2) is welded, clamped, injection molded or molded around in the plug.

31. A plug according to claim 30, **characterized in that** the membrane (2) is welded into the plug.

32. Accumulators having at least one plug (1) according to any of claims 1 to 31.

33. Lead accumulators having at least one plug (1) according to any of claims 1 to 31.

## Revendications

1. Bouchon pour accumulateurs comprenant un volume de gaz au-dessus d'un électrolyte contenu dans l'accumulateur, bouchon dans lequel un échange gazeux se produit à travers un corps (2) imperméable au liquide et perméable au gaz, bouchon dans lequel un séparateur d'aérosol (3) est disposé entre le corps et le volume de gaz au-dessus de l'électrolyte, où le séparateur d'aérosol (3) comprend :
- un tube (16) comprenant une extrémité ouverte tournée vers l'électrolyte et une extrémité fermée éloignée de l'électrolyte, extrémité fermée au niveau de laquelle un flux de gaz / un flux d'aérosol ascendant est dévié radialement vers l'extérieur, et
- un espace de séparation (14) entre le tube (16) et une surface intérieure du bouchon (12), espace de séparation vers lequel est acheminé le flux de gaz / le flux d'aérosol et qui dirige le flux d'aérosol de manière centrifuge suivant une trajectoire circulaire.

2. Bouchon selon la revendication 1, **caractérisé en ce que** le corps imperméable au liquide et perméable au gaz est une membrane (2).

3. Bouchon selon la revendication 2, **caractérisé en ce que** la membrane (2) se compose d'un matériau qui est choisi parmi le groupe des matériaux suivants : polypropylène, polyéthylène, polytétrafluoroéthylène (PTFE) et fluorure de polyvinylidène (PVDF).

4. Bouchon selon la revendication 3, **caractérisé en ce que** la membrane (2) se compose de polytétrafluoroéthylène (PTFE) microporeux étiré.

5. Bouchon selon au moins l'une quelconque des revendications 2 à 4, **caractérisé en ce que** la membrane (2) est rendue oléophobe.

6. Bouchon selon au moins l'une quelconque des revendications 2 à 4, **caractérisé en ce que** la membrane (2) est laminée.

7. Bouchon selon la revendication 6, **caractérisé en ce que** la membrane (2) est laminée au moins sur une couche se composant d'un matériau support.

8. Bouchon selon la revendication 7, **caractérisé en ce que** le matériau support est de préférence un tissu non tissé, un tissu tissé, un tissu à mailles, une plaque perforée ou une grille.

9. Bouchon selon au moins l'une quelconque des revendications 2 à 8, **caractérisé en ce que** la membrane (2) a une taille de pores au maximum de 1 µm.

10. Bouchon selon au moins l'une quelconque des revendications 2 à 8, **caractérisé en ce que** la membrane (2) a une porosité au moins de 50 %.

11. Bouchon selon au moins l'une quelconque des revendications 2 à 8, **caractérisé en ce que** la membrane (2) a une épaisseur au maximum de 20 µm.

12. Bouchon selon au moins l'une quelconque des revendications 2 à 8, **caractérisé en ce que** la membrane (2) a une taille de pores au maximum de 0,45 µm.

13. Bouchon selon au moins l'une quelconque des revendications 2 à 8, **caractérisé en ce que** la membrane (2) a une porosité au moins de 70 %.

14. Bouchon selon au moins l'une quelconque des revendications 2 à 8, **caractérisé en ce que** la membrane (2) a une épaisseur au maximum de 5 µm.

15. Bouchon selon au moins l'une quelconque des revendications précédentes, **caractérisé en ce que** le séparateur d'aérosol (3) comprend en outre un absorbeur à fibres et/ou un séparateur en cascade.

16. Bouchon selon la revendication 15, **caractérisé en ce que** le séparateur d'aérosol (3) est une unité de construction comprenant un séparateur à inertie de masses, un séparateur centrifuge et un séparateur en cascade.

17. Bouchon selon la revendication 16, **caractérisé en ce que** le séparateur d'aérosol (3) se compose d'un tube cylindrique creux (16) dont le diamètre extérieur est beaucoup plus petit que le diamètre intérieur au niveau du côté du bouchon (1) tourné vers l'électrolyte, où le tube (16), au niveau du côté tourné vers l'électrolyte, comprend un épaississement concentrique (18) de forme annulaire, lequel épaississement comprend en particulier un diamètre qui est égal au diamètre intérieur du bouchon (1), où les surfaces opposées l'une à l'autre de l'épaississement de forme annulaire forment l'une par rapport à l'autre un angle tel, que le côté tourné vers l'électrolyte soit configuré pratiquement de façon horizontale et tel que l'autre côté présente une inclinaison qui, en regardant de l'extérieur vers l'intérieur, est montante, et qu'une plaque concentrique (20) est disposée sur l'extrémité du tube qui est éloignée de l'électrolyte, où le diamètre de cette plaque (20) est sensiblement égal au diamètre intérieur du bouchon (1), et que la plaque (20) comprend un premier perçage (4), le tube (16) un deuxième perçage (7), et l'épaississement (18) un troisième perçage (5), où les perçages (4), (5) pratiqués dans la plaque (20) et dans l'épaississement (18) s'étendent de façon parallèle à la surface extérieure du tube (16), où les perçages (4), (5) sont disposés en étant décalés de 180°, et où le deuxième perçage (7) est pratiqué à travers la paroi du tube cylindrique (16), où ce perçage (7) renvoie au perçage (5) pratiqué dans l'épaississement (18) et est diamétralement opposé au perçage (4) pratiqué dans la plaque (20), où le perçage (4) pratiqué dans la plaque (20) ou le perçage (5) pratiqué dans l'épaississement (18) forme un angle de 90° par rapport au perçage (7) pratiqué dans la paroi du tube cylindrique (16).

18. Bouchon selon la revendication 17, **caractérisé en ce que** le diamètre intérieur du tube cylindrique (16) est plus grand que le troisième perçage (5).

19. Bouchon selon la revendication 17 ou 18, **caractérisé en ce que** le troisième perçage (5) agit comme reflux pour le liquide d'électrolyte séparé qui était contenu dans les aérosols.

20. Bouchon selon au moins l'une quelconque des revendications précédentes, **caractérisé en ce que** des éléments fixes sont aménagés à l'intérieur du séparateur d'aérosol (3) dans la direction d'écoulement du flux de gaz / d'aérosol.

21. Bouchon selon la revendication 20, **caractérisé en ce que** les éléments fixes sont des pales.

22. Bouchon selon la revendication 20, **caractérisé en ce que** les éléments fixes sont des ailettes.

23. Bouchon selon la revendication 20, **caractérisé en ce que** les éléments fixes sont des fibres.

24. Bouchon selon l'une quelconque des revendications précédentes, **caractérisé en ce qu'**un absorbeur à fibres est disposé entre la membrane (2) et le séparateur d'aérosol (3).

25. Bouchon selon la revendication 24, **caractérisé en ce que** l'absorbeur à fibres est fixé sur la partie supérieure du séparateur d'aérosol (3).

26. Bouchon selon la revendication 24, **caractérisé en ce que** l'absorbeur à fibres est laminé sur la membrane (2).

27. Bouchon selon la revendication 24, **caractérisé en ce que** l'absorbeur à fibres est laminé sur la partie inférieure d'un support supportant la membrane (2).

28. Bouchon selon l'une quelconque des revendications précédentes, **caractérisé en ce que** le séparateur d'aérosol (3) est soudé, moulé par injection ou encastré dans le bouchon.

29. Bouchon selon la revendication 28, **caractérisé en ce que** le séparateur d'aérosol (3) est encastré dans le bouchon.

30. Bouchon selon l'une quelconque des revendications 2 à 29, **caractérisé en ce que** la membrane (2) est soudée, encastrée, moulée par injection ou extrudée dans le bouchon.

31. Bouchon selon la revendication 30, **caractérisé en ce que** la membrane (2) est soudée dans le bouchon.

32. Accumulateurs comprenant au moins un bouchon (1) selon l'une quelconque des revendications 1 à 31.

33. Accumulateurs au plomb comprenant au moins un bouchon (1) selon l'une quelconque des revendications 1 à 31.
